Europäisches Patentamt

(19) European Patent Office

Office européen des brevets

(11) Veröffentlichungsnummer: **0 028 370**
**B1**

# (12) EUROPÄISCHE PATENTSCHRIFT

(45) Veröffentlichungstag der Patentschrift:
25.04.84

(51) Int. Cl.³: **B 60 R  1/08,** B 60 R  1/04

(21) Anmeldenummer: **80106500.4**

(22) Anmeldetag: **23.10.80**

(54) **Kraftfahrzeug mit einem den toten Winkel erfassenden Zusatzspiegel.**

(30) Priorität: **31.10.79  DE 2943941**

(43) Veröffentlichungstag der Anmeldung:
**13.05.81 Patentblatt 81/19**

(45) Bekanntmachung des Hinweises auf die Patenterteilung:
**25.04.84 Patentblatt 84/17**

(84) Benannte Vertragsstaaten:
**DE FR GB IT SE**

(56) Entgegenhaltungen:
**BE - A - 845 604**
**DE - A - 2 017 093**
**DE - A - 2 708 173**
**DE - A - 2 726 543**
**US - A - 3 859 899**

(73) Patentinhaber: **BAYERISCHE MOTOREN WERKE
Aktiengesellschaft, Postfach 40 02 40,
D-8000 München 40 (DE)**

(72) Erfinder: **Hagn, Bruno, Ing.-grad., Landshuter Allee 156,
D-8000 München (DE)**
Erfinder: **Neuhauser, Werner, Ing.-grad., Wasserburger
Landstrasse 23, D-8011 Zorneding (DE)**
Erfinder: **Wimmer, Robert, Ing.-grad., Post Ebersberg,
D-8019 Oberlaufing 3 (DE)**

(74) Vertreter: **Dexheimer, Rolf, c/o Bayerische Motoren
Werke Aktiengesellschaft Postfach 40 02 40,
D-8000 München 40 (DE)**

Kraftfahrzeug mit einem den toten Winkel erfassenden Zusatzspiegel

Die Erfindung bezieht sich auf ein Kraftfahrzeug mit der im Oberbegriff des Hauptanspruches angegebenen Spiegelanordnung.

Eine derartige Spiegelanordnung ist aus der DE-OS 2 726 543 bekannt. Hierbei ist der Zusatzspiegel in einem Gehäuse gelagert, das unmittelbar der Seitenscheibe benachbart angeordnet ist. Diese bekannte Anordnung hat den Nachteil, daß mit einer in bekannter Weise über Luftaustrittsöffnungen im Armaturenbrett des Kraftfahrzeugs bewirkten Belüftung der Seitenscheibe der für die Durchsicht zum Außenrückspiegel wesentliche Bereich der Seitenscheibe nicht ausreichend belüftet ist, da der Luftstrom durch den Zusatzspiegel bzw. das Gehäuse abgeschirmt wird.

Der Erfindung liegt die Aufgabe zugrunde, bei einem Kraftfahrzeug nach dem Oberbegriff des Patentanspruches durch eine mit geringem Bauaufwand erzielte Anordnung und Ausgestaltung des Gehäuses für den Zusatzspiegel die Belüftung der Seitenscheibe aus dem Heiz- und Belüftungssystem in dem für die Durchsicht zum Außenspiegel wesentlichen Bereich gezielt zu beginnen.

Diese Aufgabe ist mit den im Kennzeichen des Hauptanspruches angegebenen Merkmalen gelöst.

Mit der Erfindung ist der für die Durchsicht zum Außenrückspiegel wesentliche Bereich an der Innenseite der Seitenscheibe einwandfrei belüftet und damit ein Beschlagen dieses Bereiches vermieden.

Ein Ausführungsbeispiel der Erfindung ist anhand einer Zeichnung beschrieben.

Die Zeichnung zeigt in

Fig. 1 ein Gehäuse für einen Zusatzspiegel an der Innenseite einer Fahrzeugtür, in perspektivischer Darstellung,

Fig. 2 einen Schnitt gemäß der Linie II-II in Fig. 1.

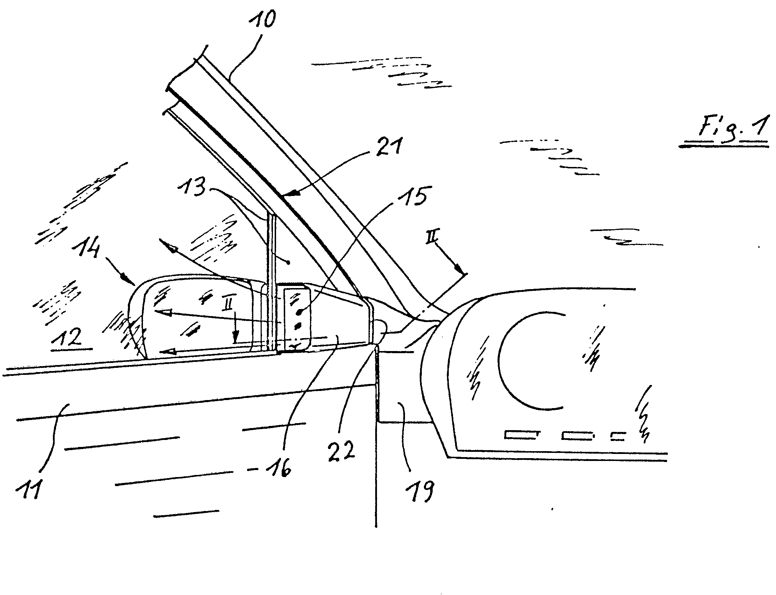

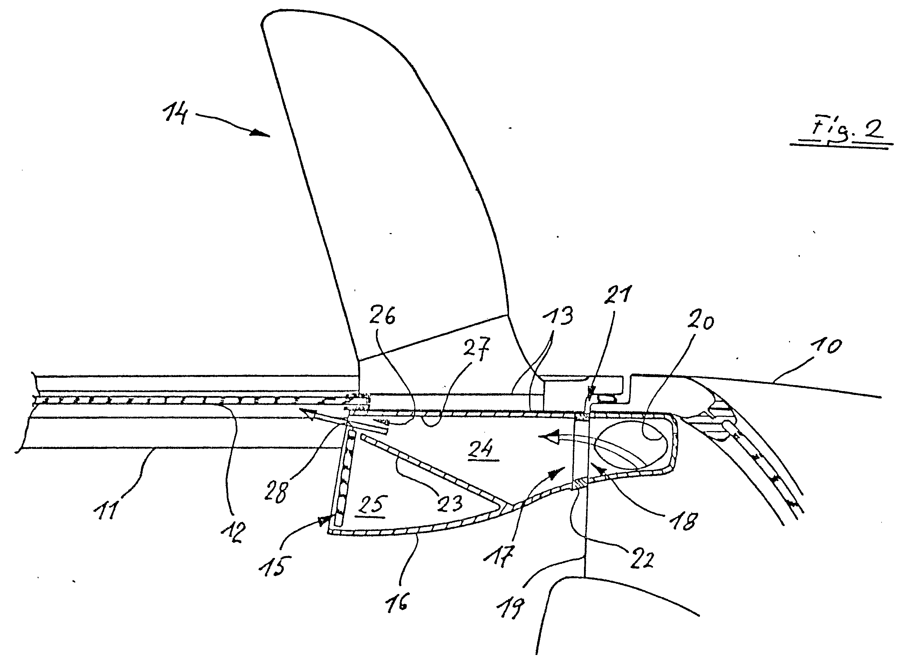

Die Fig. 1 zeigt von einem nicht näher dargestellten Personenkraftwagen 10 eine Seitentür 11 mit einer Seitenscheibe 12. Die Seitentür 11 weist eine im Türvorderbereich im Anschluß an die Seitenscheibe 12 über die Seitentürbrüstung hinausgeführte Abdeckung 13 auf. Wie aus der Fig. 2 hervorgeht, ist an der Außenseite der Seitentür 11 an der Abdeckung 13 ein Außenrückspiegel 14 angeordnet. Dem Außenrückspiegel 14 etwa gegenüber ist im vorderen Bereich des Fahrzeuginnenraumes an der Innenseite der Seitentür 11 ein Zusatzspiegel 15 angeordnet.

Der zur Erfassung des toten Winkels angeordnete Zusatzspiegel 15 ist in einem Gehäuse 16 einstellbar gelagert. Das Gehäuse 16 ist an der Abdeckung 13 angeordnet. In seinem, dem Zusatzspiegel 15 abgelegenen Ende weist das Gehäuse 16 eine Durchbrechung 17 auf. Diese steht mit einer im Bereich der Türfuge 21 in einem Armaturenbrett 19 angeordneten Luftaustrittsöffnung 18 eines Luftführungskanals 20 eines Heiz- und Belüftungssystems des Personenkraftwagens 10 in Verbindung. Die Durchbrechung 17 des Gehäuses 16 ist über ein elastisches Element 22, wie einem Dichtungsring oder einem Faltenbalg, mit der Luftaustrittsöffnung 18 verbunden.

Das Gehäuse 16 ist in seinem Inneren durch eine Trennwand 23 in eine luftführende Kammer 24 und in eine, den Zusatzspiegel 15 aufnehmende Kammer 25 unterteilt. Die Trennwand 23 endet vor dem Zusatzspiegel 15. Dessen der Seitenscheibe 12 zugewandter Rand 28 sowie die dem Spiegelrand 28 benachbarte Gehäusewandung 27 begrenzen einen Luftausströmspalt 26. Über den Luftausströmspalt 26 fließt die über den Luftführungskanal 20 in die Kammer 24 des Gehäuses 16 eingeleitete Luft zur Seitenscheibe 12 zuerst in den für die Durchsicht zum Außenrückspiegel 14 wesentlichen Bereich ab.

Mit dem erfindungsgemäß gestalteten Gehäuse 16 zur Aufnahme des Zusatzspiegels 15 ist eine wenig Bauaufwand erfordernde und stilistisch ansprechende Verlängerung für einen im Armaturenbrett 19 endenden Luftführungskanal 20 für Belüftungsluft der Seitenscheibe 12 erzielt. Dabei ist von erheblichem Vorteil, daß die Belüftung der Seitenscheibe 12 in einem für die Durchsicht zum Außenrückspiegel 14 wesentlichen Bereich gezielt beginnt. Somit ist in diesem, dem Fahrzeuginnenraum zugekehrten Bereich der Seitenscheibe 12 ein Beschlag rasch entfernt bzw. ein Beschlagen vermieden.

**Patentanspruch**

Kraftfahrzeug, umfassend ein Heiz- und Belüftungssystem mit einer Defroster-Düse im Armaturenbrett und einer Spiegelanordnung mit einem den toten Winkel erfassenden Zusatzspiegel,

– der im vorderen Bereich einer Seitentür der Innenseite einer Seitenscheibe benachbart einem an der Außenseite der Seitentür angeordnetem Außenrückspiegel zugeordnet ist,
– wobei der Zusatzspiegel in einem gesonderten Gehäuse gehalten ist,

dadurch gekennzeichnet,

– daß das Gehäuse (16) an einer im Türvorderbereich über die Seitentürbrüstung hinausgeführten Abdeckung (13) angeordnet ist,
– daß das Gehäuse im Innern mittels einer Trennwand (23) unterteilt ist in eine den Zusatzspiegel (15) aufnehmende Kammer (25) und
– in eine Kammer (24), die als luftführender Verbindungskanal dient, der
– einerseits mit einer jenseits der Türfuge (21) im Armaturenbrett (19) angeordneten Luftaustrittsöffnung (18) des Heiz- und Belüftungssystems unter Zwischenschaltung eines elastischen Elementes (22) in Verbindung steht und
— andererseits mit einem als Defroster-Düse wirkenden Luftausströmspalt (26) zwischen dem Zusatzspiegel (15) und der Seitenscheibe (12).

**Claim**

A motor vehicle comprising a heating and ventilating system with a defroster nozzle in the instrument panel and with a mirror arrangement having an additional mirror which covers the blind angle and

— which, in the forward zone of a side door, is adjacent the inner face of a side window and is associated with an exterior rear-view mirror arranged on the outer face of the side door,
— the additional mirror being held in a separate housing,

characterized in

— that the housing (16) is arranged on a covering (13) which is in the forward zone of the door and extends over the breast of the side door,
— that, in the interior, the housing is divided, by means of a partition (23), into a compartment (25) accommodating the additional mirror (15), and
— into a compartment (24), which acts as an air-conducting connecting duct, which
— on the one hand, communicates with an air-discharge opening (18) of the heating and ventilating system that is arranged beyond the door joint (21) in the instrument panel (19), a resilient element (22) being interposed, and
— on the other hand, communicates with an air-outflow gap (26) between the additional mirror (15) and the side window (12), which gap acts as a defroster nozzle.

**Revendication**

Véhicule automobile, comprenant un système de chauffage et de ventilation, avec une buse de dégivreur dans le tableau de bord et un dispositif de rétroviseur pourvu d'un miroir additionnel supprimant l'angle mort,

— et qui, voisin de la face intérieure d'une glace latérale dans la zone de l'avant d'une porte latérale, est associé à un rétroviseur extérieur monté sur la face extérieure de la porte latérale,
— le miroir additionnel étant tenu dans un boîtier séparé, caractérisé en ce
— que le boîtier (16) est monté sur un recouvrement dirigé au-dessus de l'appui de la porte latérale dans la zone de l'avant de la porte,
— en ce que le boîtier est divisé à l'intérieur par une cloison de séparation (23) en un chambre (25) recevant le miroir additionnel (15), et
— en une chambre (24) servant de canal de liaison par lequel passe l'air, canal qui :
— d'une part est en liaison avec un orifice de sortie d'air (18) ménagé au-delà du joint de porte (21) dans le tableau de bord (19), du système de chauffage et de ventilation avec interposition d'un élément élastique (22) et
— d'autre part en liaison avec une fente d'écoulement d'air (26) agissant comme buse de dégivreur, entre le miroir additionnel (15) et la glace latérale (12).

Fig. 1

Fig. 2